**Europäisches Patentamt**

**European Patent Office**

**Office européen des brevets**

(19)

(11) **EP 1 551 115 A1**

(12) **EUROPEAN PATENT APPLICATION**
published in accordance with Art. 158(3) EPC

(43) Date of publication:
**06.07.2005 Bulletin 2005/27**

(51) Int Cl.⁷: **H04B 7/26**, H04B 1/707,
H04J 11/00

(21) Application number: **02807906.9**

(22) Date of filing: **07.10.2002**

(86) International application number:
**PCT/JP2002/010397**

(87) International publication number:
**WO 2004/032375 (15.04.2004 Gazette 2004/16)**

(84) Designated Contracting States:
**AT BE BG CH CY CZ DE DK EE ES FI FR GB GR IE IT LI LU MC NL PT SE SK TR**

(71) Applicant: **FUJITSU LIMITED**
**Kawasaki-shi, Kanagawa 211-8588 (JP)**

(72) Inventors:
• **DATEKI, Takashi, Fujitsu Limited**
**Kawasaki-shi, Kanagawa 211-8588 (JP)**

• **SHIMIZU, Masahiko, Fujitsu Limited**
**Kawasaki-shi, Kanagawa 211-8588 (JP)**

(74) Representative: **Sunderland, James Harry et al**
**Haseltine Lake,**
**Imperial House,**
**15-19 Kingsway**
**London, WC 2W 6UD (GB)**

(54) **TRANSMISSION POWER CONTROL METHOD FOR OFDM-CDMA SYSTEM AND TRANSMISSION POWER CONTROLLER**

(57) In power control in an OFDM-CDMA system for creating a number of subcarrier components by multiplying a plurality of symbols by channelization codes of a length that conforms to a spreading factor, and transmitting each of the subcarrier components by a corresponding subcarrier, a subcarrier band is divided into a plural subcarrier blocks, the number of the subcarriers in each block is a whole-number multiple of the spreading factor, an identical transmission power is assigned to each subcarrier in each subcarrier block obtained by such division, and transmission power is controlled from one subcarrier block to another.

*FIG. 3*

EP 1 551 115 A1

**Description**

Technical Field

This invention relates to a transmission power control method and apparatus in OFDM-CDMA. More particularly, the invention relates to a transmission power control method and apparatus in an OFDM-CDMA communication system for creating a number of subcarrier components by multiplying a plurality of symbols by channelization codes of a length that conforms to a spreading factor, and transmitting each of these subcarrier components by a corresponding subcarrier.

Background Art

Multicarrier modulation schemes have become the focus of attention as next-generation mobile communication schemes. Using multicarrier modulation makes it possible to implement wideband, high-speed data transmission and, moreover, enables the effects of frequency-selective fading to be mitigated by narrowing the band of each subcarrier. Further, using OFDM (Orthogonal Frequency Division Multiplexing) makes it possible to raise the efficiency of frequency utilization further and, moreover, enables the effects of inter-symbol interference to be eliminated by providing a guard interval for every OFDM symbol.

In recent years, there has been extensive research in multicarrier CDMA schemes (MC-CDMA) and application thereof to next-generation wideband mobile communications is being studied. With MC-CDMA, partitioning into a plurality of subcarriers is achieved by serial-to-parallel conversion of transmit data and spreading of orthogonal codes in the frequency domain.

An orthogonal frequency / code division multiple access (OFDM/CDMA) scheme, which is a combination of OFDM and MC-CDMA that is one type of MC-CDMA, also is being studied. This is a scheme in which a signal, which has been divided into subcarriers by MC-CDMA, is subjected to IFFT processing and orthogonal frequency multiplexing to raise the efficiency of frequency utilization.

·Principles of multicarrier CDMA scheme

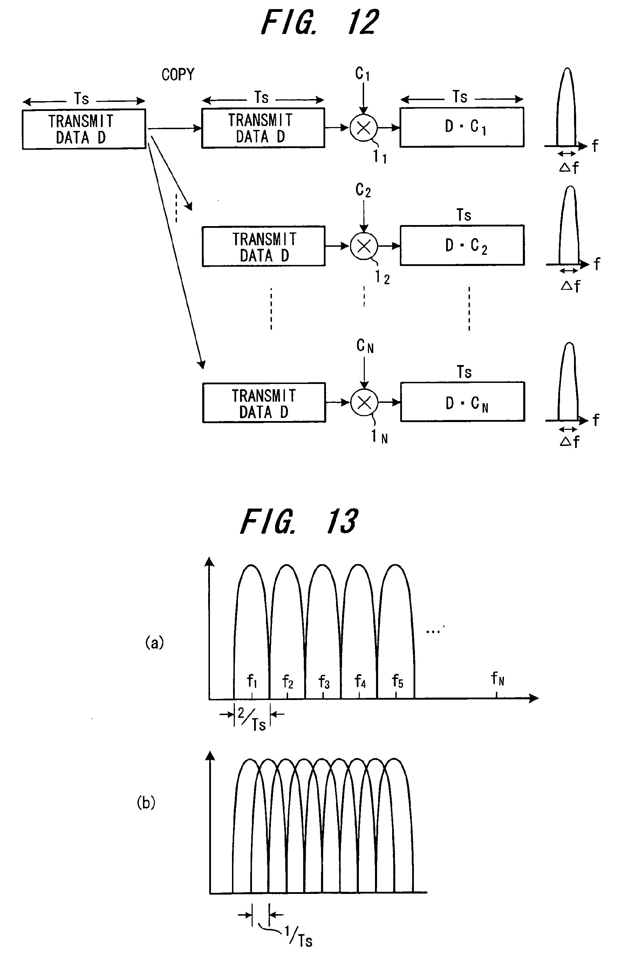

According to the principles of multicarrier CDMA, N-number of items of copy data are created from transmit data D of one symbol having a period of Ts, as shown in Fig. 12, the items of copy data are multiplied individually by respective ones of codes $C_1$ to $C_N$, which constitute spreading code (orthogonal code) serving as channelization code, using multipliers $1_1$ to $1_N$, respectively, and products $D \cdot C_1$ to $D \cdot C_N$ undergo multicarrier transmission by N-number of subcarriers of frequencies $f_1$ to $f_N$ illustrated in Fig. 13(a). The foregoing relates to a case where a single item of symbol data undergoes multicarrier transmission. In actuality, however, as will be described later, transmit data is converted to parallel data of M symbols, the M-number of symbols are subjected to the processing shown in Fig. 12, and all results of M $\times$ N multiplications undergo multicarrier transmission using M $\times$ N subcarriers of frequencies $f_1$ to $f_{NM}$. The total number MN of subcarriers is (parallel-sequence count M) $\times$ (spreading factor N). Further, orthogonal frequency/code division multiple access (OFDM/CDMA) can be achieved by using subcarriers having the frequency placement shown in Fig. 13(b).

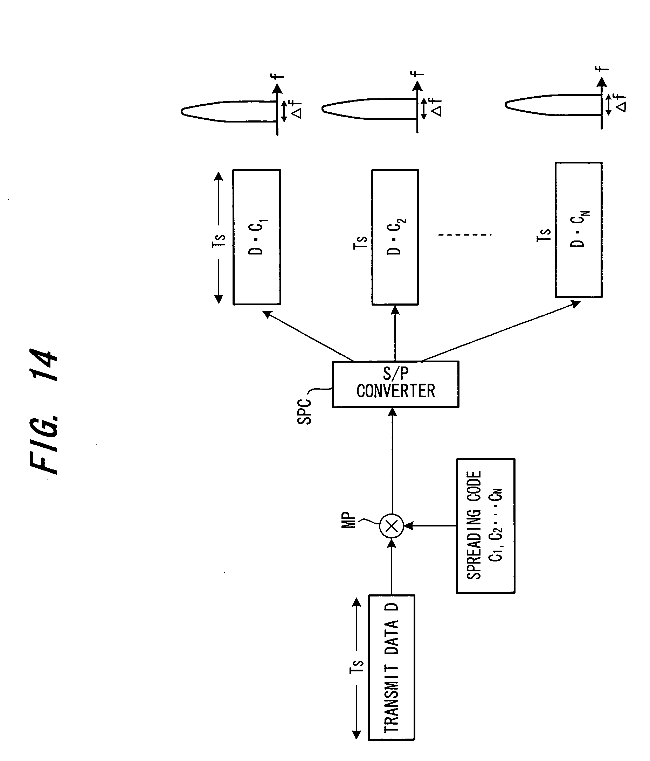

After transmit data is copied, each item of copy data is multiplied by a channelization code, as set forth above. However, as shown in Fig. 14, it is also possible to adopt an arrangement in which transmit data is multiplied by channelization codes $C_1$, $C_2$, $\cdots$, $C_N$ on a per-symbol basis using a multiplier MP, after which a serial/parallel conversion is applied by a serial/parallel converter (S/P converter) SPC. It should be noted that in actuality, M symbol's worth of data undergoes the S/P conversion.

·Structure of OFDM-CDMA on transmitting side (base station)

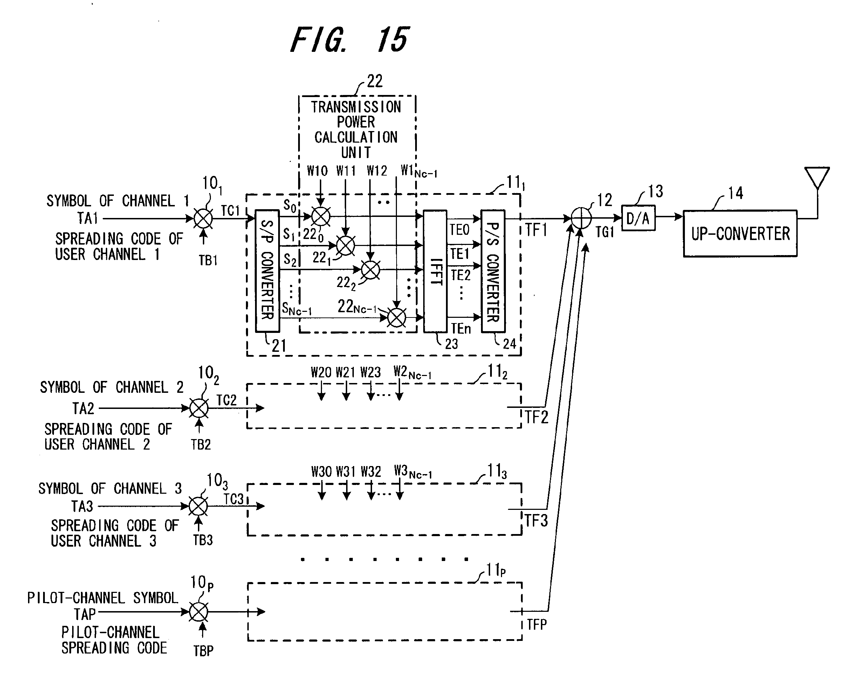

Fig. 15 is a diagram illustrating the structure on the transmitting side (base station) of OFDM-CDMA. Transmit data is converted to a complex baseband signal (symbol) comprising an in-phase component and a quadrature-phase component.

A spreader $10_1$ for a first user (first channel) multiplies transmit data TA1 of the first user by a channelization code TB1 ($C_{11}$, $C_{21}$, $\cdots$, $C_{N1}$) of the first user on a per-symbol basis and outputs encoded data TC1. The channelization code TB1 has a chip rate that is SF times the symbol rate, where SF is the spreading factor and SF = N holds.

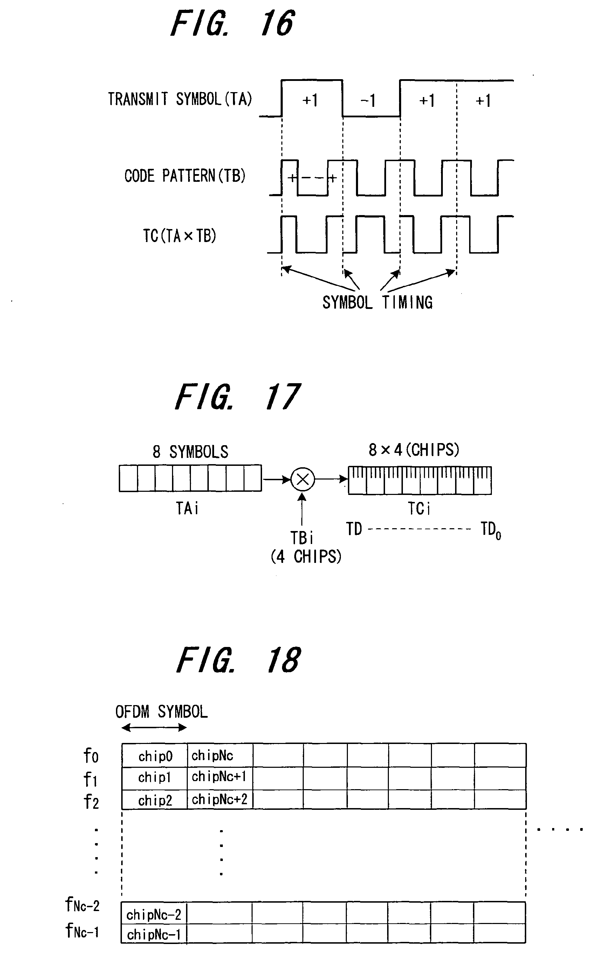

Fig. 16 illustrates the relationship among an input symbol sequence TA1, a channelization code pattern TB1 and result TC1 of multiplying these together in a case where SF = 4 holds. The channelization code TB1 of the first channel has been selected in such a manner that it will have zero correlation to, i.e., will be orthogonal to, the channelization codes of other channels. Channelization codes TB2, TB3 of other channels have been selected in a similar manner. Each single bit of the channelization codes TB1 to TB3 is referred to as a chip. For example, if TB1, TB2, TB3 are set as follows:

$$TB1 = 1, -1, -1, 1$$

$$TB2 = 1, 1, -1, -1$$

$$TB3 = 1, -1, 1, -1$$

then the correlation among these will be zero in the following manner:

$$\text{correlation (TB1, TB2)} = 1 \times 1 + (-1) \times 1 + (-1) \times$$

$$(-1) + 1 \times (-1) = 0$$

Thus, orthogonal code patterns are used as channelization codes in order to achieve separation of a plurality of channels.

An S/P converter 21 of a power controller / IFFT unit $11_1$ subjects M symbol's worth of $N \times M$ chip sequences to an S/P conversion. For example, if M=8, N=4 holds, the S/P converter converts 32 chips $TD_0$ to $TD_{31}$ shown in Fig. 17 to parallel data $S_0$ to $S_{Nc-1}$ ($Nc = N \times M$) and outputs the parallel data. That is, the S/P converter 21 outputs subcarriers $S_0$ to $S_{Nc-1}$ for multicarrier transmission by subcarriers $f_0$ to $f_{Nc-1}$. These $N_c$ ($= M \times N$)-number of subcarriers $S_1$ to $S_{Nc-1}$ construct an OFDM symbol.

By virtue of the foregoing, the chip sequences that are output from the spreader $10_1$ are disposed in a frequency (subcarrier) - time plane, as shown in Fig. 18, by the S/P conversion. Furthermore, $chip_0$ to $chip_{Nc-1}$ correspond to an initial Nc-number of subcarrier signal $S_0$ to $S_{Nc-1}$, and $chip_{Nc}$ to $chip_{2Nc-1}$ correspond to the next Nc-number of subcarrier signal $S_0$ to $S_{Nc-1}$.

Next, multipliers $22_0$ to $22_{Nc-1}$ that construct a transmission power controller 22 multiply Nc-number of subcarrier signals $S_0$ to $S_{Nc-1}$ by weighting coefficients $W1_0$ to $W1_{Nc-1}$. That is, the transmission power controller 22 performs power control of the subcarriers independently by the weighting coefficients $W1_0$ to $W1_{Nc-1}$. The weighting coefficients $W1_0$ to $W1_{Nc-1}$ have their values updated at fixed time intervals depending upon the state of the propagation path and interference noise.

An IFFT (Inverse Fast Fourier Transform) unit 23 applies IFFT (Inverse Fast Fourier Transform) processing to the power-controlled subcarrier signals, which enter in parallel, and a PS converter 24 converts the IFFT output to a time-function signal TF1 by a parallel-to-serial (P/S) conversion and outputs the signal.

In a manner similar to that of the first channel, the other user channels also spread-spectrum modulate transmit data TA2, TA3 by spreaders $10_2$, $10_3$ using different channelization codes TB2, TB3, apply transmission power control and IFFT processing by power controller / IFFT units $11_2$, $11_3$ using weighting coefficients Wij, and output time-function signals TF2, TF3. Further, in a manner similar to that of the user channels, a pilot channel spread-spectrum modulates a pilot symbol TAP by a spreader $10_p$ using a pilot spreading code TBP, applies IFFT processing (control of power is not carried out) by an IFFT unit $11_p$ and outputs a time-function signal TFP.

A combiner 12 code-multiplexes the time-function signals TF1, TF2, TF3, TFP of each of the channels, a DA converter 13 converts the code-multiplexed signal to an analog signal, and an up-converter 14 performs an up-conversion to radio frequency after orthogonal modulation, applies high-frequency amplification and transmits the resultant signal from an antenna.

·Structure of OFDM-CDMA on receiving side

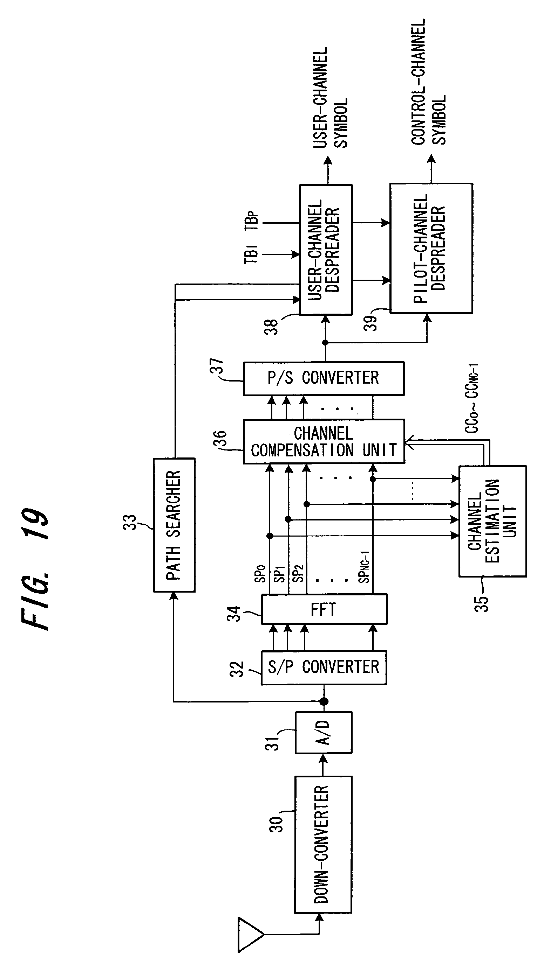

Fig. 19 is a diagram illustrating the structure on the receiving side (mobile station) of OFDM-CDMA. A down-converter 30 applies frequency conversion processing to a received multicarrier signal and then executes orthogonal demodulation processing and outputs a baseband signal. An AD converter 31 converts the baseband signal to a digital signal and outputs the digital signal to an S/P converter 32 and path searcher 33. The S/P converter 32 converts the AD converter output to parallel data and inputs the parallel data to an FFT (Fast Fourier Transform) unit 34. The path searcher 33, which has the structure of a matched filter, calculates the correlation between the spreading code of the first channel and the receive signal, decides despread timing and inputs this despread timing to a user-channel despreader 38 and pilot-channel despreader 39.

The FFT unit 34 executes FFT processing at an FFT window timing, converts a time-domain signal to Nc (= N × M) subcarrier signals $SP_0$ to $SP_{Nc-1}$, a channel estimation unit 35 performs channel estimation on a per-subcarrier basis using the pilot that has been multiplexed onto each subcarrier, and a channel compensation unit 36 multiplies the FFT output by channel estimation values $CC_0$ to $CC_{Nc-1}$ of every subcarrier, thereby performing channel compensation (compensation for fading). That is, the channel estimation unit 35 estimates influence $A\exp(j\phi)$ of fading on each subcarrier using the pilot signal, and the channel compensation unit 36 multiplies the subcarrier signal component of the transmit symbol by $(1/A)\cdot\exp(-j\phi)$ to compensate for fading.

A P/S converter 37 converts the channel-compensated Nc (= N × M) subcarrier signals to serial data and inputs the serial data to the user-channel despreader 38 and pilot-channel despreader 39.

The user-channel despreader 38 and pilot-channel despreader 39 multiply the input data stream by the channelization code TB1 of the first channel and the pilot spreading code TBP at the despread timing entering from the path searcher 33, and demodulate the user-channel symbol and control-channel symbol.

·Transmission power control

In accordance with a fundamental theorem (the water-filling theorem) of information communication, it is known that if noise is non-white noise and the noise spectrum is likened to the topography of a lake bottom, the spectral distribution of transmission power at which the amount of information capable of being transmitted correctly by communication is maximized will become the lake depth obtained when the lake is filled with total transmission power just as if the power were water. It should be noted that transmission power = 0 will hold at a frequency where the noise spectrum is very large and the topography of the noise is higher than the water surface.

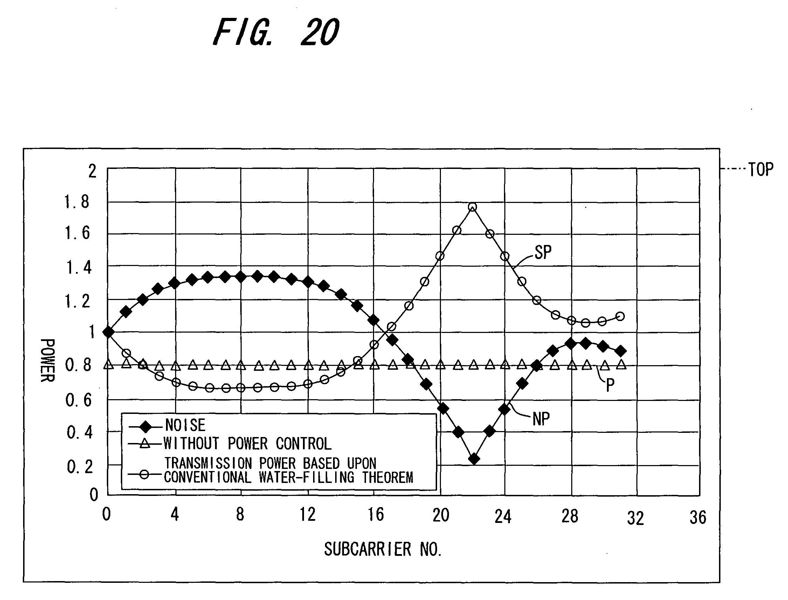

Fig. 20 is a diagram for describing conventional transmission power control based upon the water-filling theorem in a case where it is assumed that there is no attenuation of transmitted waves by the propagation path, that reception power is received in a power distribution the same as that of the transmission power and that carrier-to-carrier interference noise is not constant. Here NP represents a noise spectrum, SP a transmission power spectrum that is based upon the water-filling theorem and P a transmission power in a case where power is not controlled. Further, the integrated value of the transmission power spectrum SP in Fig. 20 becomes the total transmission power, TOP represents the water surface and depth from the water surface is the transmission power spectrum SP.

With a conventional OFDM system, mutually adjacent subcarriers send and receive information that is mutually independent. By controlling transmission power on a per-subcarrier basis, therefore, a difference develops in weighting coefficients Wij between subcarriers and, as a result, no problems arise even if a disparity occurs in power distribution between one subcarrier and another.

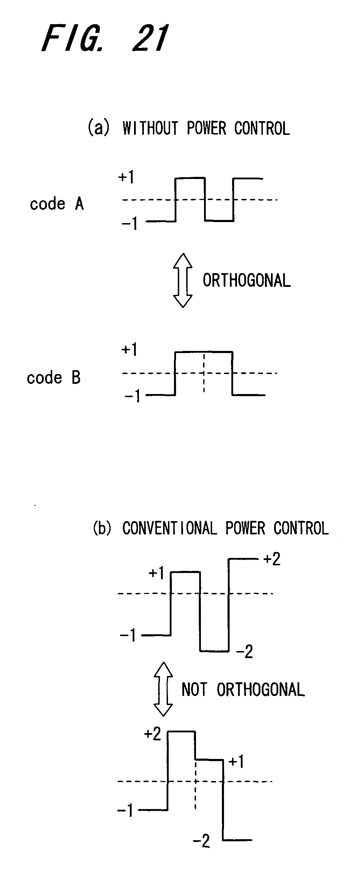

However, if such subcarrier-to-subcarrier transmission power control is applied to an OFDM-CDMA communication system, the orthogonality of channelization codes declines and so does quality. A decline in orthogonality caused by conventional power control will be described with reference to Fig. 21. If transmission control is not carried out, the power of each subcarrier will be the same, as indicated at (a). Consequently, the correlation between channelization codes A and B will become zero and orthogonality is maintained. In actuality, if the channelization codes A, B are assumed to be as follows:

$$\text{CODE A} = -1, +1, -1, +1$$

$$\text{CODE B} = -1, +1, +1, -1$$

then the correlation will be as follows:

$$(-1) \times (-1) + 1 \times 1 + (-1) \times 1 + 1 \times (-1) = 0$$

However, if transmission control is performed on a per-subcarrier basis as in the manner of power control according to the prior art, orthogonality is lost. For example, if, as indicated at (b), the channelization codes A, B are as follows:

$$\text{CODE A} = -1, +1, -2, +2$$

$$\text{CODE B} = -1, +2, +1, -2$$

then the correlation will be as follows:

$$(-1) \times (-1) + 1 \times 2 + (-2) \times 1 + 2 \times (-2) = -3$$

and thus correlation is lost.

Thus, when it is attempted to apply a conventional scheme in which control of power is performed subcarrier by subcarrier to an OFDM-CDMA system, this degrades orthogonality of the channelization codes and, as a consequence, this invites a decline in communication quality.

Accordingly, an object of the present invention is to provide a transmission power control method and transmission power control apparatus in which orthogonality of channelization codes can be maintained and a decline in communication quality prevented even when applied to an OFDM-CDMA system.

Disclosure of the Invention

The present invention provides a transmission power control method and apparatus in an OFDM-CDMA system for creating a number of subcarrier components by multiplying a plurality of symbols by channelization code of a length that conforms to a spreading factor, and transmitting each of these subcarrier components by a corresponding subcarrier. A subcarrier band is divided into a plural subcarrier blocks, the number of the subcarriers in each block is a whole-number multiple of the spreading factor, an identical transmission power is assigned to each subcarrier in each subcarrier block obtained by such division, and transmission power is controlled from one subcarrier block to another.

A first method of controlling transmission power includes in a case where transmission signal power undergoes attenuation or a phase change on a propagation path and is multiplied by a coefficient γ, the controlling step of the transmission power includes steps of: obtaining, on a per-subcarrier basis, a transmission power value for which a total of transmission power and a value N/γ obtained by dividing interference power N by the coefficient γ of the propagation path will be rendered constant; calculating average transmission power in each subcarrier block based upon the transmission power value of each subcarrier; and controlling transmission power of the subcarrier block based upon the average transmission power value.

A second method of controlling transmission power includes controlling transmission power of the subcarrier block so as to render constant a ratio of average receive-signal power to interference power of the subcarrier block.

If the above arrangement is adopted, orthogonality of channelization codes can be maintained and degradation of communication quality can be prevented.

Brief Description of the Drawings

Fig. 1 is a diagram illustrating the structure of a base station in an OFDM-CDMA communication system according to a first embodiment;
Fig. 2 is a diagram illustrating a weighing coefficient calculation unit;
Fig. 3 is a diagram useful in describing transmission power based upon transmission power control of the present invention;
Fig. 4 is a diagram illustrating another structure weighing coefficient calculation unit;
Fig. 5 is a diagram illustrating the structure of a mobile station in the OFDM-CDMA communication system according to the first embodiment;
Fig. 6 is a diagram of level measurement unit;
Fig. 7 is a diagram of a channel estimation unit;
Fig. 8 is a diagram showing the structure of a base station according to a second embodiment;
Fig. 9 is a diagram showing the structure of a mobile station according to the second embodiment;
Fig. 10 is a diagram showing the structure of a base station according to a third embodiment;
Fig. 11 is a diagram showing the structure of a mobile station according to the third embodiment;
Fig. 12 is a diagram useful in describing the principle of a multicarrier CDMA scheme;
Fig. 13 is a diagram useful in describing placement of frequencies in multicarrier transmission and OFDM transmission;
Fig. 14 is another diagram useful in describing the principle of a multicarrier CDMA scheme;
Fig. 15 is a diagram illustrating structure on a transmitting side (base station) in OFDM-CDMA according to the prior art;
Fig. 16 illustrates the relationship among an input symbol sequence TA1, a channelization code pattern TB1 and result TC1 of multiplying these together in a case where SF = 4 holds;

Fig. 17 is a diagram useful in describing an S/P conversion;

Fig. 18 is a diagram of chip placement in a frequency (subcarrier) - time (symbol) plane;

Fig. 19 is a diagram illustrating structure on a receiving side (mobile station) in OFDM-CDMA according to the prior art;

Fig. 20 is a diagram useful in describing conventional transmission power control based upon the water-filling theorem; and

Fig. 21 is a diagram useful in describing a decline in orthogonality caused by power control according to the prior art.

Best Mode for Carrying Out the Invention

(A) First Embodiment

·Structure of base station

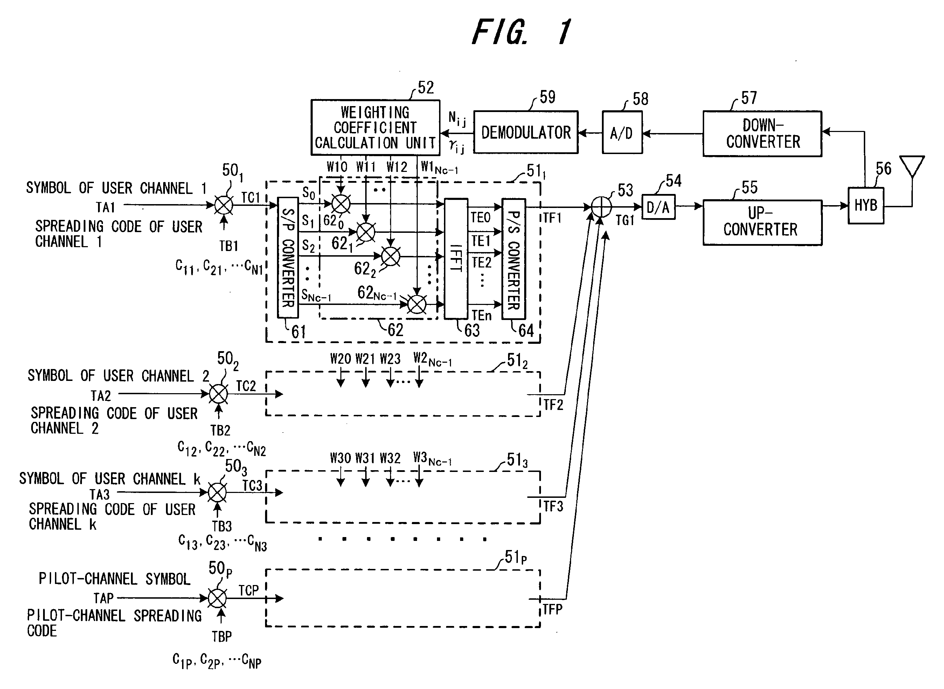

Fig. 1 is a diagram illustrating the structure of a base station in an OFDM-CDMA communication system according to a first embodiment. Transmit data of each user channel and pilot channel has been converted to a complex baseband signal (symbol) comprising an in-phase component and a quadrature-phase component.

A spreader $50_1$ for the first user (first channel) multiplies each symbol TA1 of the first user by a channelization code TB1 ($C_{11}$, $C_{21}$, $\cdots$, $C_{N1}$) of the first user and outputs encoded data TC1. The channelization code TB1 has a chip rate that is SF times the symbol rate, where SF is the spreading factor and SF = N holds.

An S/P converter 61 of a power controller / IFFT unit $51_1$ subjects M symbol's worth of $N \times M$ chip sequences to an S/P conversion. For example, if M=8, N=4 holds, the S/P converter converts 32 (= $8 \times 4$) chips to parallel data $S_0$ to $S_{Nc-1}$ (Nc = N $\times$ M) and outputs the parallel data. That is, the S/P converter 61 outputs subcarriers $S_0$ to $S_{Nc-1}$ for multicarrier transmission by subcarriers $f_0$ to $f_{Nc-1}$. These $N_c$ (= M $\times$ N)-number of subcarriers $S_1$ to $S_{Nc-1}$ construct an OFDM symbol.

A weighting coefficient calculation unit 52 divides the subcarrier band $f_0 \sim f_{Nc-1}$ into M-number of subcarrier blocks by a number that is a whole-number multiple (i.e., 1) of the spreading factor N, controls transmission power for every interval (subcarrier block) obtained by division, and assigns a constant transmission power to each subcarrier in a subcarrier block. More specifically, if we let $W_1$ to $W_M$ represent the values of transmission power of the M-number of subcarrier blocks, then the weighting coefficient calculation unit decides the weighting coefficients of each of the subcarriers as follows:

$$W_1 = W1_0 = W1_1 = \cdots = W1_{N-1}$$

$$W_2 = W1_N = W1_{(N+1)} = \cdots = W1_{2N-1}$$

$$\cdots \cdots \cdots$$

$$W_M = W1_{(M-1)N} = W1_{(M-1)N+1} = \cdots = W1_{Nc-1} \tag{1}$$

These weighting coefficients $W_1$ to $W_M$ are updated at fixed time intervals depending upon the state of the propagation path and interference noise.

Multipliers $62_0$ to $62_{Nc-1}$ that construct a transmission power controller 62 multiply Nc-number of subcarrier signals $S_0$ to $S_{Nc-1}$ by weighting coefficients $W1_0$ to $W1_{Nc-1}$. Since the weighting coefficients have been decided as described above, the transmission powers of the N-number of subcarriers, which is the number of channelization codes of each subcarrier block, are equal.

An IFFT (Inverse Fast Fourier Transform) unit 63 applies IFFT (Inverse Fast Fourier Transform) processing to the power-controlled subcarrier signals, which enter in parallel, and a P/S converter 64 converts the IFFT output to a time-function signal TF1 by a parallel-to-serial (P/S) conversion and outputs the signal.

In a manner similar to that of the first user channel, the other user channels also spread-spectrum modulate data symbols TA2, TA3 by spreaders $50_2$, $50_3$ using different channelization codes TB2, TB3, apply transmission power control and IFFT processing by power controller / IFFT units $51_2$, $51_3$ using weighting coefficients Wij, and output time-function signals TF2, TF3. Further, in a manner similar to that of the user channels, a pilot channel spread-spectrum modulates a pilot symbol TAP by a spreader $50_p$ using a pilot spreading code TBP, applies IFFT processing (control of power is not carried out) by an IFFT unit $51_p$ and outputs a time-function signal TFP.

A combiner 53 code-multiplexes the time-function signals TF1, TF2, TF3, TFP of each of the channels, a DA converter 54 converts the code-multiplexed signal to an analog signal, and an up-converter 55 performs an up-conversion to radio frequency after orthogonal modulation, applies high-frequency amplification and transmits the resultant signal from an antenna via a hybrid circuit 56.

Further, the receive signal is input to a down-converter 57 via the hybrid circuit 56. The down-converter 57 applies frequency conversion processing to a received multicarrier signal and then executes orthogonal demodulation processing and outputs a baseband signal. An AD converter 58 converts the baseband signal to a digital signal and outputs the digital signal to demodulator 59. The latter executes demodulation processing and inputs interference power $N_{ij}$ and propagation-path coefficient $\gamma_{ij}$ of each subcarrier, sent from the receiving side, to the weighting coefficient calculation unit 52.

·Structure of weighting coefficient calculation unit

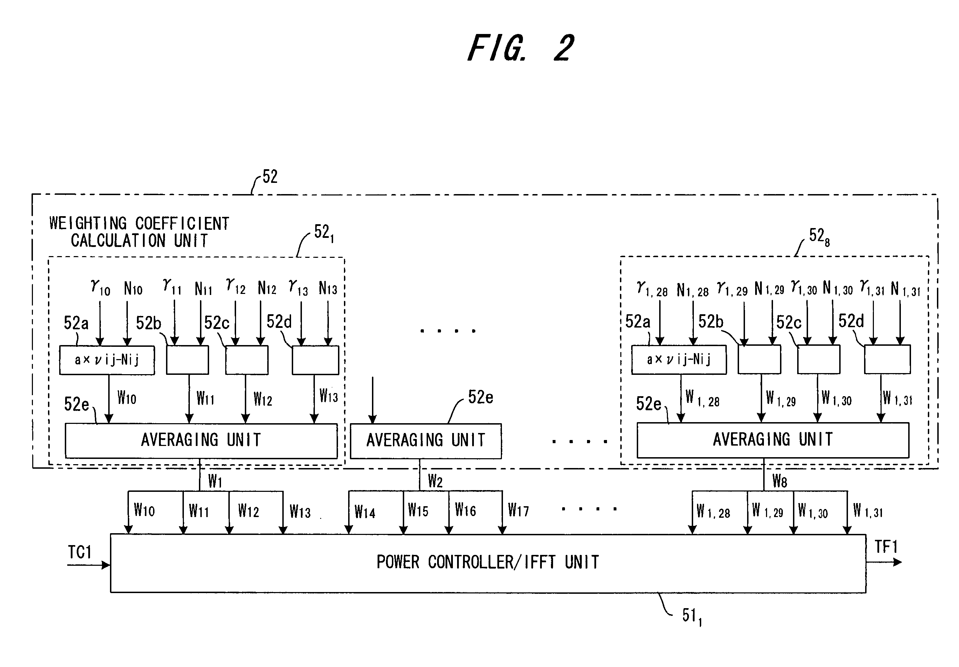

Fig. 2 is a diagram illustrating a weighing coefficient calculation unit.

The weighting coefficient calculation unit 52 divides the subcarrier band, which is composed of $N_c$ (= M × N)-number of subcarriers $f_0 \sim f_{Nc-1}$, by a value that is a whole-number multiple of the spreading factor (i.e., N × 1) of the spreading factor N, thereby dividing the band into M-number of subcarrier blocks. Fig. 2 illustrates a case where N=4, M=8 holds. Transmission power calculation units $52_1$ to $52_8$ of every subcarrier block calculate transmission powers subcarrier by subcarrier using subcarrier-by-subcarrier transmission power $N_{ij}$ (where i represents the user channel and j the subcarrier) and propagation-path coefficient $\gamma_{ij}$ sent from the receiving side, and then calculate average transmission powers $W_1$ to $W_M$ of the subcarrier block using the transmission powers of these subcarriers. A method of calculating transmission power $w_{ij}$ on a per-subcarrier basis will now be described.

In a case where weighting has been transmitted as $w_{ij}$, transmission power at the receiver becomes $P_j = w_{ij} \times \gamma_{ij}$ with regard to a subcarrier j. It is assumed that the amount of interference is $N_{ij}$. When $P_j$, $N_{ij}$ are considered upon being normalized by channel $\gamma$, we have $w_{ij} = P_j/\gamma_{ji}$, $N_{ij}/\gamma_{ij}$. It is as if interference is received while fluctuating depending on the channel in the manner $N_{ij}/\gamma_{ij}$ and transmission power is received with the weighting on the transmitting side remaining at that value.

In accordance with the fundamental theorem (the water-filling theorem) of information communication, it is known that if noise is non-white noise and the noise spectrum is likened to the topography of a lake bottom, the spectral distribution of power at which the amount of information capable of being transmitted correctly by communication is maximized will become the lake depth obtained when the lake is filled with total transmission power just as if the power were water.

In the above-described case, the topography of the noise is $N_{ij}/\gamma_{ij}$ and the depth when filled with water (total transmission power), namely the transmission power distribution, is expressed by the following equation using a constant $\underline{a}$ because the surface is at a constant height:

$$N_{ij}/\gamma_{ij} + \text{transmission power} = a = \text{constant}$$

Here the transmission power is $w_{ij} = P_j/\gamma_{ij}$ and therefore the following equation holds:

$$N_{ij}/\gamma_{ij} + w_{ij} = a$$

Ultimately, the weighting coefficient is decided by the following equation:

$$w_{ij} = a - N_{ij}/\gamma_{ij} \quad (w_{ij} = 0 \text{ if } w_{ij} < 0 \text{ holds}) \tag{2}$$

If we write the following:

$$\sum_j w_{ij} = P_t$$

such that the total transmission power will not be changed, then $\underline{a}$ can be found from the following equation:

$$a = \frac{1}{N_c}\left(P_t + \sum_{j=0}^{Nc-1}\frac{N_{ij}}{\gamma_{ij}}\right)$$

Thus, subcarrier transmission power calculation units 52a to 52d of the transmission power calculation units $52_1$ to $52_8$ calculate the transmission powers of N (= 4) subcarriers in accordance with Equation (2), and averaging units 52e output the average values of the transmission powers of N (= 4) subcarriers as transmission powers $W_1$ to $W_M$ of each of the subcarrier blocks. That is, let the transmission powers of N-number of subcarriers $f_0$ to $f_{N-1}$ in a first subcarrier block each be represented by $W_1$, let the transmission powers of N-number of subcarriers $f_N$ to $f_{2N-1}$ in a second subcarrier block each be represented by $W_2$, and in similar fashion, let the transmission powers of N-number of subcarriers $f_{(m-1)N}$ to $f_{Nc-1}$ in an Mth subcarrier block each be represented by $W_M$. The weighting coefficients $W1_1$ to $W1_{Nc-1}$ of each subcarrier are decided in accordance with Equation (1) and are input to the transmission power controller 62 of the power controller / IFFT unit $51_1$.

·Result of transmission power control

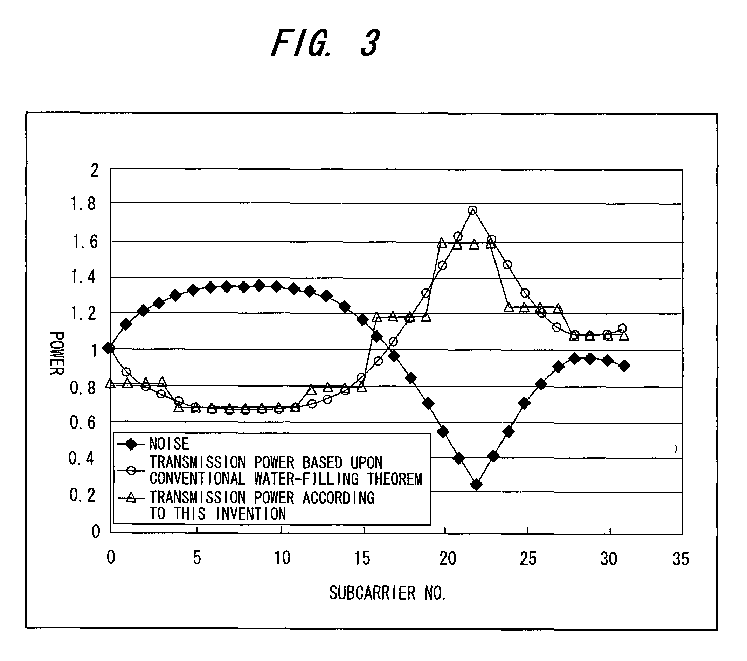

If the arrangement described above is adopted, transmission power control is carried out in units of the channelization code count N (= 4), whereby orthogonality is maintained, as illustrated in Fig. 3. For example, even if channelization codes A, B of two user channels become as follows owing to transmission power control:

$$\text{Code A} = -1 \times W_1, +1 \times W_1, -1 \times W_1, +1 \times W_1$$

$$\text{Code B} = -1 \times W_1', +1 \times W_1', +1 \times W_1', -1 \times W_1'$$

the correlation will be

$$W_1 \times W_1' = \{(-1) \times (-1) \times + 1 \times 1 + (-1) \times 1 + 1 \times$$

$$(-1)\} = 0$$

and orthogonality is maintained.

·Other structure of weighting coefficient calculation unit

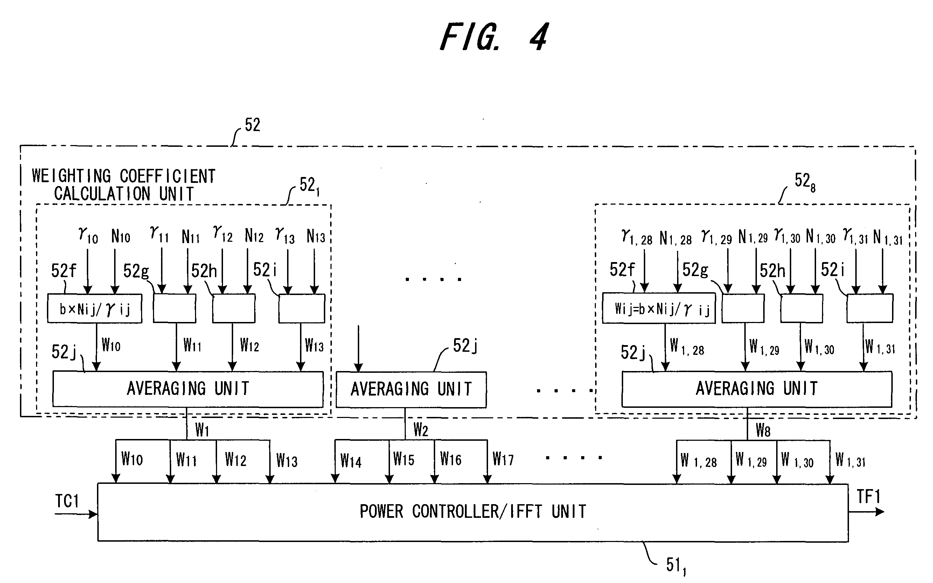

Fig. 4 is diagram illustrating another structure of weighing coefficient calculation unit. This differs in the method of calculating transmission power $w_{ij}$ of each subcarrier. In a case where transmission signal power undergoes attenuation or a phase change on a propagation path and is multiplied by a coefficient $\gamma_{ij}$, there is obtained, on a per-subcarrier basis, a transmission power value $w_{ij}$ for which a total of transmission power and a value $N_{ij}/\gamma_{ij}$ obtained by dividing interference power $N_{ij}$, which has been estimated by a receiver, by the coefficient $\gamma_{ij}$ of the propagation path will be rendered constant.

More specifically, in a case where weighting has been transmitted as $w_{ij}$, transmission power at the receiver becomes $P_j = w_{ij} \times \gamma_{ij}$ with regard to a subcarrier j. Further, if it is assumed that the amount of interference is $N_{ij}$, then a weighting coefficient for which the ratio of the receive signal to noise will be a constant $\underline{b}$ is given by the following equation:

signal-to-noise ratio = $w_{ij} \times \gamma_{ij}/N_{ij}$ = b Accordingly, the weighting coefficient $w_{ij}$ will be as follows:

$$w_{ij} = b \times N_{ij}/\gamma_{ij} \tag{3}$$

If we write the following:

$$\sum_{j} w_{ij} = P_t$$

where the total transmission power is represented by Pt, then $\underline{b}$ can be found from the following:

$$b = \frac{P_t}{\sum_{j=0}^{Nc-1} \frac{N_{ij}}{\gamma_{ij}}}$$

Thus, subcarrier transmission power calculation units 52f to 52i of the transmission power calculation units $52_1$ to $52_8$ calculate the transmission powers of the N (= 4) subcarriers in accordance with Equation (3), and an averaging unit 52j outputs the average value of the N (= 4) subcarriers as the transmission powers $W_1$ to $W_M$ of each of the subcarrier blocks. The weighting coefficients W1$_1$ to W1$_{Nc-1}$ of each of the subcarriers are decided in accordance with Equation (1) and are input to the power controller /IFFT unit $51_1$.

·Structure of mobile station

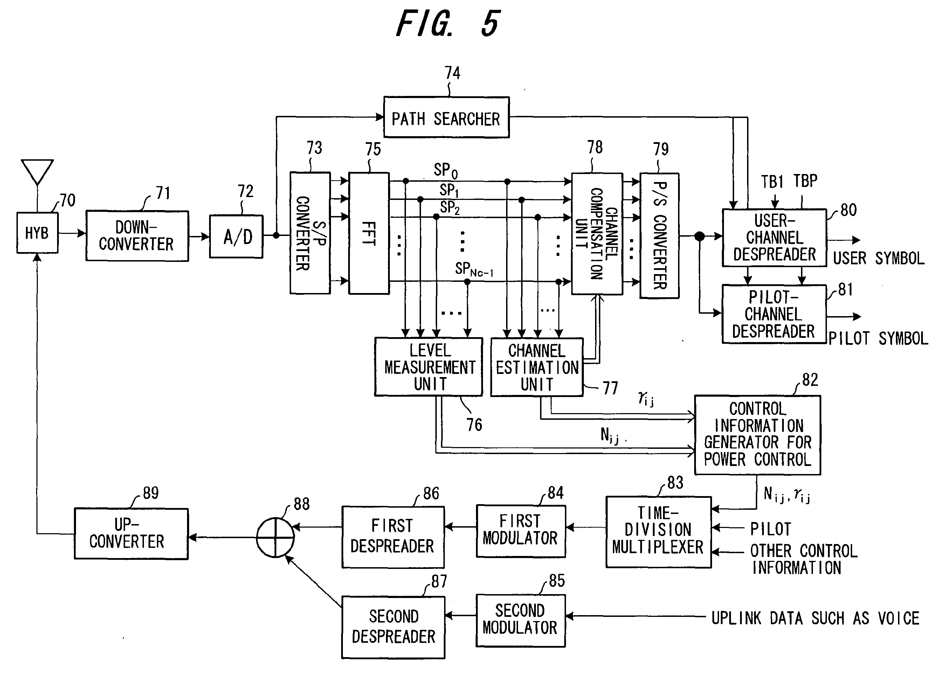

Fig. 5 is a diagram showing the structure of a mobile station in the OFDM-CDMA communication system of the first embodiment. Here the channelization code of the first user channel has been assigned.
A down-converter 71 applies frequency conversion processing to a multicarrier signal received via a hybrid circuit 70 and then executes orthogonal demodulation processing and outputs a baseband signal. An AD converter 72 converts the baseband signal to a digital signal and outputs the digital signal to an S/P converter 73 and path searcher 74. The S/P converter 73 converts the AD converter output to parallel data and inputs the parallel data to an FFT (Fast Fourier Transform) unit 75. The path searcher 74, which has the structure of a matched filter, calculates the correlation between the spreading code of the first channel and the receive signal, decides despread timing and inputs this despread timing to a user-channel despreader 80 and pilot-channel despreader 81.
The FFT unit 75 executes FFT processing at an FFT window timing, converts a time-domain signal to Nc (= N $\times$ M) subcarrier signals $SP_0$ to $SP_{Nc-1}$, and a level measurement unit 76 calculates the desired signal power and interference power $N_{ij}$ of each subcarrier using the pilot signal that has been multiplexed onto each subcarrier.
A channel estimation unit 77 performs channel estimation on a per-subcarrier basis using the pilot that has been multiplexed onto each subcarrier, and a channel compensation unit 78 multiplies the FFT output by channel estimation values $\gamma_{ij}$ (i = 1, j = 0 to Nc-1) of every subcarrier, thereby performing channel compensation.
A P/S converter 79 converts the channel-compensated Nc (= N $\times$ M) subcarrier signals to serial data and inputs the serial data to the user-channel despreader 80 and pilot-channel despreader 81.
The user-channel despreader 80 and pilot-channel despreader 81 multiply the input data stream by the channelization code TB1 of the first channel and the pilot spreading code TBP at the despread timing entering from the path searcher 74, and demodulate the user-channel symbol and control-channel symbol.
A control information generator 82 for power control outputs, in a form suited to transmission, the channel estimation value $\gamma_{ij}$ and interference power $N_{ij}$ of each subcarrier output from the level measurement unit 76 and channel estimation unit 77. Since two types of channels (dedicated physical data channel DPDCH and dedicated physical control channel DPCCH) have been provided for the uplink from the mobile station to the base station, a time-division multiplexer 83 embeds a pilot symbol, control information (channel estimation value $\gamma_{ij}$ and interference power $N_{ij}$) for power control and other control information in the control channel DPCCH by time division.
A first data modulator 84 applies BPSK modulation to the data on the control channel DPCCH, and a second data modulator 85 applies BPSK modulation to the data on the data channel DPDCH. User data such as voice has been embedded in the data channel DPDCH.
A first spreader 86 of the control channel spreads the control information using a spreading code having little correlation with the data channel, and a second despreader 87 of the data channel spreads the user data by a spreading code having little correlation with the control channel. A combiner 88 multiplexes the spread data channel and control channel, and an up-converter 89 applies RF processing (band limiting, power amplification and up-conversion) and transmits the result.

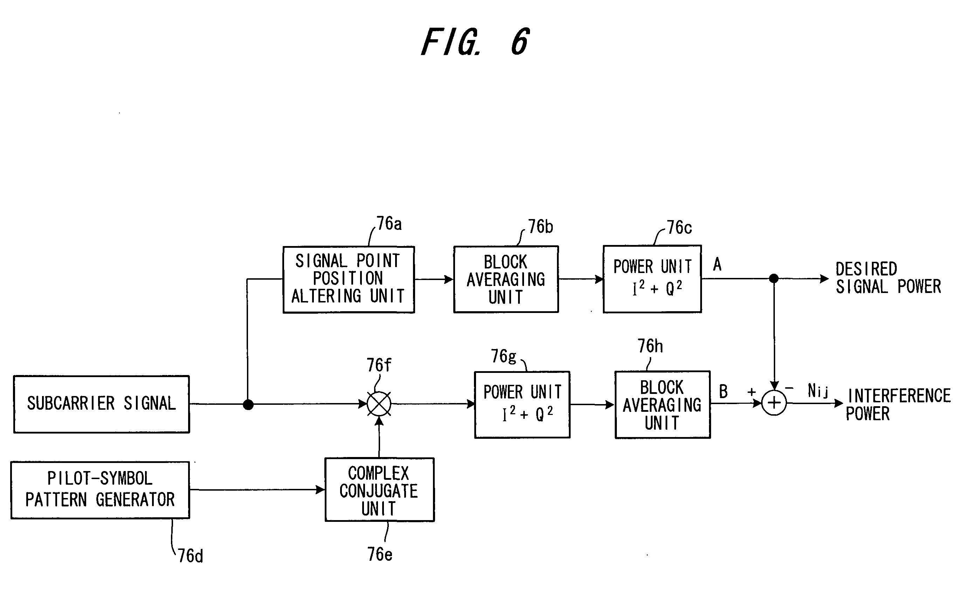

Fig. 6 is a diagram of the structure of the level measurement unit 76 and illustrates a portion relating to one subcarrier only.
A signal point position altering unit 76a obtains the absolute values of I- and Q-phase components of a receive pilot signal in an I-jQ complex plane and converts the receive pilot signal to a first-quadrant signal of the I-jQ complex plane. A block averaging unit 76b calculates the average of N symbol's worth the receive pilot signal, and a power unit 76c squares the I-, Q-axis components of the average value and adds the results to thereby output the desired signal power of a prescribed subcarrier.

Meanwhile, a pilot-symbol pattern generator 76d outputs the position vector (already known) of an ideal pilot symbol point in the I-jQ complex coordinate system, a complex conjugate unit 76e outputs the complex conjugate of this position vector, and a multiplier (error vector unit) 76f calculates the complex conjugate of the position vector of the actual receive pilot symbol and ideal pilot symbol and calculates an error vector between the position vector of the actual pilot symbol and the position vector of the ideal pilot symbol. An error-power calculation unit 76g calculates the square of each axis component of the error vector and calculates the variance of the receive power (the error vector power). An average-value calculation unit 76h calculates the average value of N symbol's worth of error power and outputs the interference power $N_{ij}$.

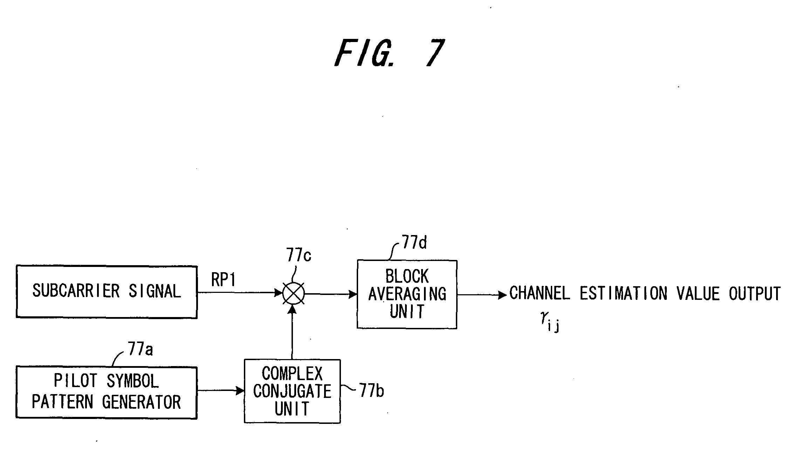

Fig. 7 is a diagram of the structure of the channel estimation unit 77 and illustrates a portion relating to one subcarrier only.

A pilot symbol pattern generator 77a outputs the position vector (already known) of an ideal pilot symbol point in the I-jQ complex coordinate system, a complex conjugate unit 77b outputs the complex conjugate of this position vector, a multiplier 77c calculates the complex conjugate of the position vector of the actual receive pilot symbol and ideal pilot symbol, and a block averaging unit 77d averages N symbol's worth of the output of the multiplier 77c and outputs the channel estimation value $\gamma_{ij}$.

(B) Second Embodiment

In the first embodiment, weighting coefficients $W_1$ to $W_M$ of the subcarrier blocks are calculated by the base station. In a second embodiment, the weighting coefficients $W_1$ to $W_M$ are calculated on the side of the mobile station and are sent to the side of the base station so that transmission power control is performed for every subcarrier block.

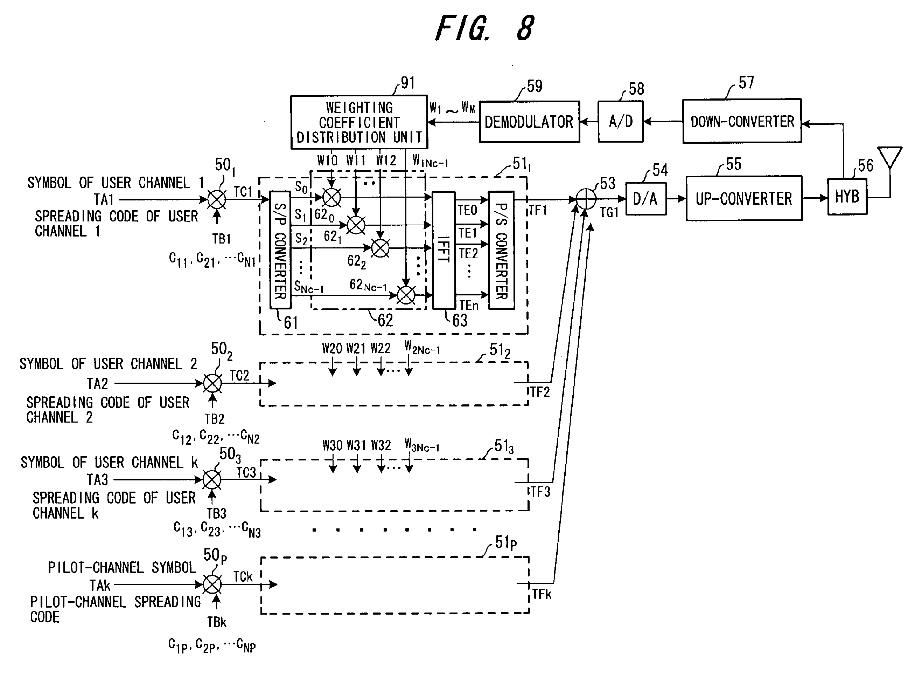

Fig. 8 is a diagram showing the structure of a base station according to the second embodiment. Components identical with those of the first embodiment are designated by like reference characters. This differs from the first embodiment in that a weighting coefficient distribution unit 91 is provided instead of the weighting coefficient calculation unit 52. The weighting coefficient distribution unit 91 decides the weighting coefficients $W1_j$ (j = 0 to Nc-1) of each subcarrier in accordance with Equation (1) using weighting coefficients $W_1$ to $W_M$ that have been sent from the receiving side and inputs these weighting coefficients to the transmission power controller 62 of the power controller / IFFT unit $51_1$. Operation is similar with regard to the other user channels.

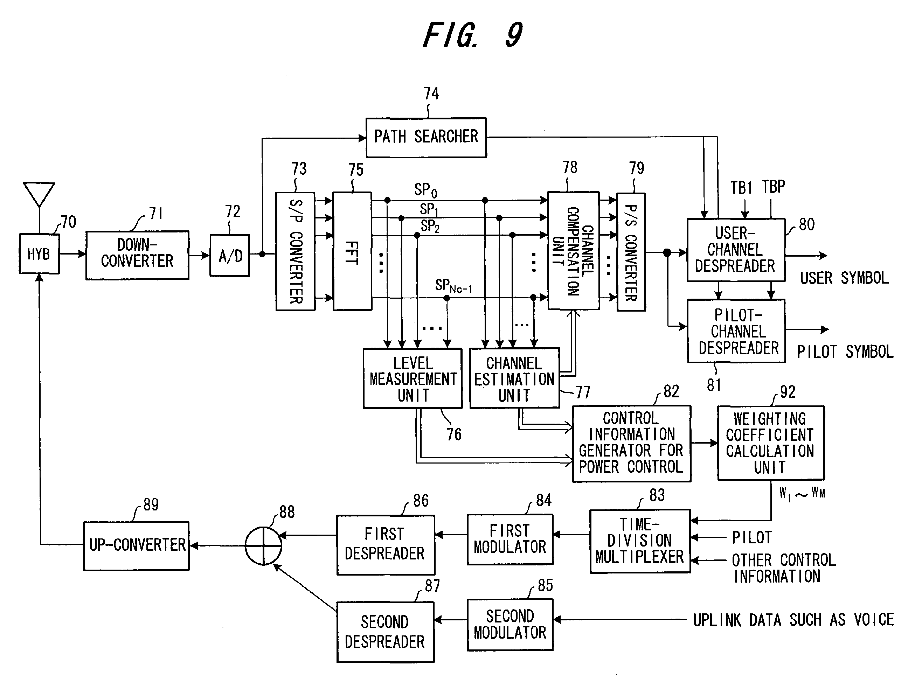

Fig. 9 is a diagram showing the structure of a mobile station according to the second embodiment. Components identical with those of the first embodiment are designated by like reference characters. This differs from the first embodiment in that a weighting coefficient calculation unit 92 is provided. The weighting coefficient calculation unit 92, which has a structure identical with that of the weighting coefficient calculation unit shown in Fig. 2 or 4, calculates the weighting coefficients $W_1$ to $W_M$ of each subcarrier block of the first user channel and transmits the weighting coefficients to the base station by the control channel.

(C) Third Embodiment

In the first embodiment, weighting coefficients $W_1$ to $W_M$ of the subcarrier blocks are calculated by the base station. In a third embodiment, the weighting coefficients $W_1$ to $W_M$ are calculated on the side of the mobile station, the calculated weighting coefficients $W_1$ to $W_M$ are compared with present weighting coefficients $W_1$ to $W_M$, a increase/decrease in the weighting coefficients is decided and an UP/DN command is sent to the side of the base station so that transmission power control is performed for every subcarrier block.

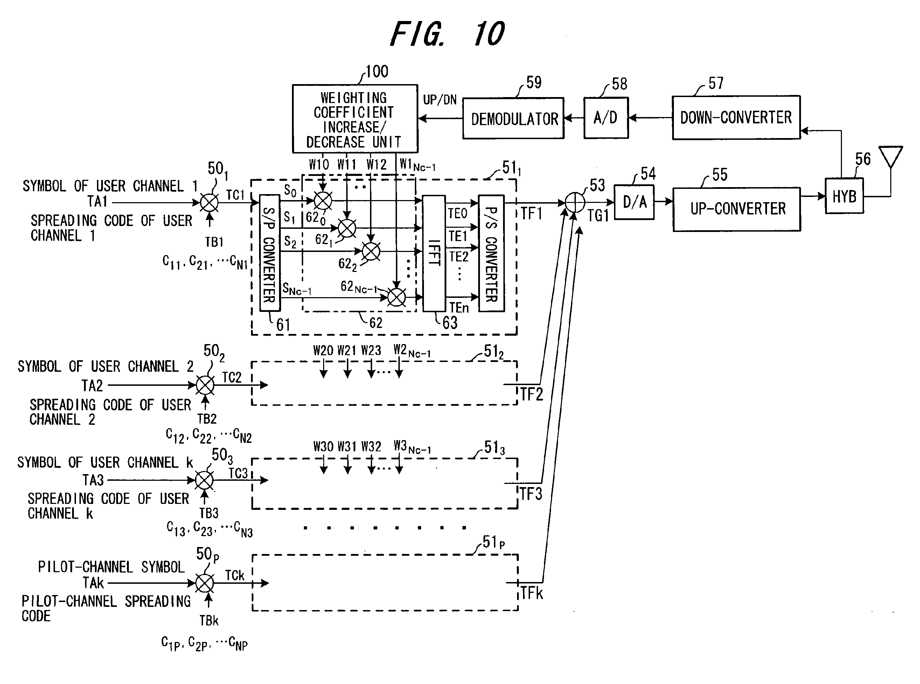

Fig. 10 is a diagram showing the structure of a base station according to the third embodiment. Components identical with those of the first embodiment are designated by like reference characters. This differs from the first embodiment in that a weighting coefficient increase/decrease unit 100 is provided instead of the weighting coefficient calculation unit 52. Since the weighting coefficient UP/DN command is received from the mobile station on a per-subcarrier-block basis, the weighting coefficient increase/decrease unit 100 increases, by a prescribed amount, the transmission power (weighting coefficients) of a subcarrier block for which an increase UP has been indicated and decreases, by a prescribed amount, the transmission power (weighting coefficients) of a subcarrier block for which a decrease DN has been indicated, thereby calculating the weighting coefficients $W_1$ to $W_M$ of each subcarrier block, subsequently decides the weighting coefficients $W1_j$ (j = 0 to Nc-1) of each subcarrier in accordance with Equation (1) using the weighting coefficients $W_1$ to $W_M$ and inputs these weighting coefficients to the transmission power controller 62 of the power controller / IFFT unit $51_1$. Operation is similar with regard to the other user channels.

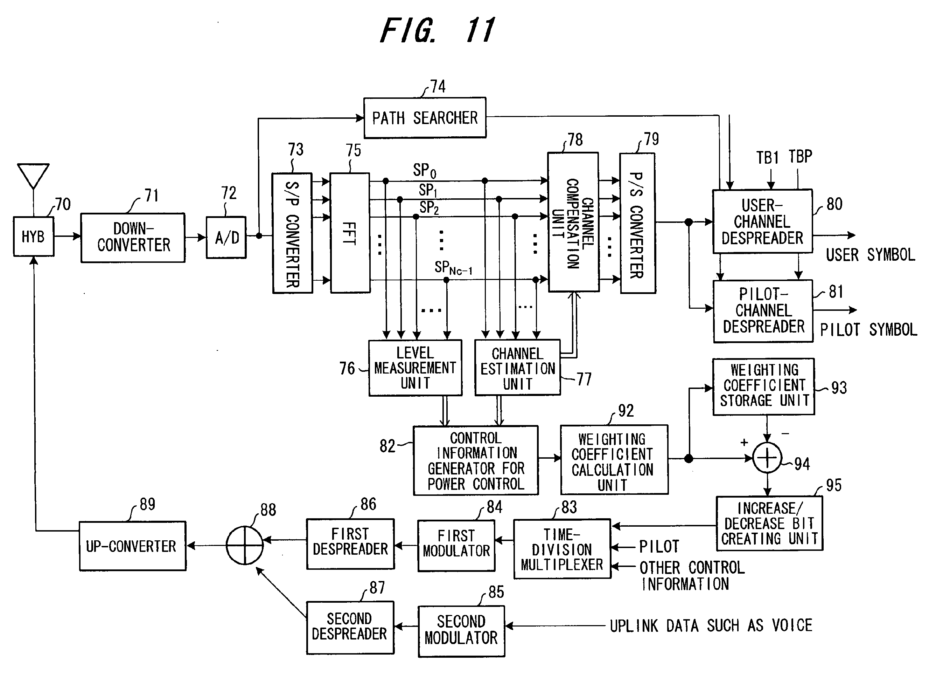

Fig. 11 is a diagram showing the structure of a mobile station according to the third embodiment. Components identical with those of the first embodiment are designated by like reference characters. This differs from the first embodiment in that it is adapted to decide an increase/decrease in weighting coefficient and so instruct the base station.

The weighting coefficient calculation unit 92, which has a structure identical with that of the weighting coefficient calculation unit shown in Fig. 2 or 4, calculates the weighting coefficients $W_1$ to $W_M$ (transmission power distribution) of each subcarrier block of the first user channel, stores the weighting coefficients in a weighting coefficient storage unit 93 and inputs the weighting coefficients to a subtractor 94. The latter compares, on a per-subcarrier-block basis, the currently calculated weighting coefficients $W_1$ to $W_M$ (transmission power distribution) and present transmission powers $W_1$ to $W_M$ (transmission power distribution) that have been stored in the storage unit 93, and an increase/decrease bit creating unit 95 creates bit data, which orders an increase if the present weighting coefficient is large and a decrease if the present weighting coefficient is small, on a per-subcarrier-block basis, and transmits the bit data to the base station by the control channel.

Thus, in accordance with the present invention, orthogonality of channelization codes can be maintained and a decline in communication quality prevented.

Though the foregoing has been described with regard to a case where power control is carried out based upon the water-filling theorem, the present invention can of course be applied even in a case where other transmission power control is performed.

Further, the foregoing has been described with regard to a case where the number (N) multiplied by 1 serves as the whole-number multiple of the spreading factor. However, orthogonality of channelization codes can be maintained and a decline in communication quality prevented even if the whole-number multiple is 2 or greater.

**Claims**

1. A power control method in an OFDM-CDMA system for creating a number of subcarrier components by multiplying a plurality of symbols by channelization codes of a length that conforms to a spreading factor, and transmitting each of said subcarrier components by a corresponding subcarrier, **characterized by**:

   dividing a subcarrier band into a plural subcarrier blocks, the number of the subcarriers in each block is a whole-number multiple of said spreading factor; and
   assigning an identical transmission power to each subcarrier in each subcarrier block obtained by the division; and
   controlling the constant transmission power from one subcarrier block to another.

2. A power control method in an OFDM-CDMA system for creating a number of subcarrier components by multiplying a plurality of symbols by channelization codes of a length that conforms to a spreading factor, and transmitting each of said subcarrier components by a corresponding subcarrier, **characterized by**:

   dividing a subcarrier band into a plural subcarrier blocks, the number of the subcarriers in each block is a whole-number multiple of said spreading factor;
   acquiring state of a propagation path for every subcarrier block obtained by the division;
   assigning an identical transmission power to each subcarrier in each subcarrier block: and
   controlling the transmission power based upon the state of said propagation path from one subcarrier block to another.

3. A power control method according to claim 2, **characterized by** the following in a case where transmission signal power undergoes attenuation or a phase change on a propagation path and is multiplied by a coefficient $\gamma$, said step of controlling the transmission power including the steps of:

   obtaining, on a per-subcarrier basis, a transmission power value for which a total of transmission power and a value $N/\gamma$ obtained by dividing interference power N by the coefficient $\gamma$ of the propagation path will be rendered constant;
   calculating average transmission power in each subcarrier block based upon said transmission power value of each subcarrier; and
   controlling the transmission power of the subcarrier block based upon said average transmission power value.

4. A power control method according to claim 2, **characterized by** controlling the transmission power of the subcarrier so as to render constant a ratio of average receive-signal power to interference power of said subcarrier block.

5. A power control method according to claim 2, **characterized in that**:

a first transceiver performs the transmission power control on a per-subcarrier-block basis and transmits a transmit signal to a second transceiver;

the second transceiver estimates interference power level and the state of the propagation path and communicates this information to the first transceiver; and

the first transceiver performs transmission power control on a per-subcarrier-block basis based upon said information accepted from the second transceiver.

6. A power control method according to claim 2, **characterized in that**:

a first transceiver performs the transmission power control on a per-subcarrier-block basis and transmits a transmit signal to a second transceiver;

the second transceiver estimates interference power level and the state of the propagation path on a per-subcarrier basis, decides weighting coefficients of transmission power on a per-subcarrier-block basis using these estimated values and transmits the weighting coefficients to the first transceiver; and

the first transceiver performs transmission power control on a per-subcarrier-block basis based upon said weighting coefficients accepted from the second transceiver.

7. A power control method according to claim 2, **characterized in that**:

a first transceiver performs transmission power control on a per-subcarrier-block basis and transmits a transmit signal to a second transceiver;

the second transceiver estimates interference power level and the state of the propagation path on a per-subcarrier basis, decides a transmission power distribution with respect to a subcarrier using these estimated values, compares said transmission power distribution and a present transmission power distribution, and incorporates whether transmission power should be increased or decreased in transmission information and communicates the transmission information to the first transceiver on a per-subcarrier-block basis; and

the first transceiver increases or decreases transmission power by a fixed amount on a per-subcarrier-block basis based upon said increase/decrease information accepted from the second transceiver.

8. A transmission power control apparatus in an OFDM-CDMA system for creating a number of subcarrier components by multiplying a plurality of symbols by channelization codes of a length that conforms to a spreading factor, and transmitting each of said subcarrier components by a corresponding subcarrier, **characterized by**:

dividing unit for dividing a subcarrier band into a plural subcarrier blocks, the number of the subcarriers in each block is a whole-number multiple of said spreading factor;

assigning unit for assigning an identical transmission power to each subcarrier in each subcarrier block obtained by the division; and

controlling the transmission power controller for the transmission power from one subcarrier block to another.

9. A transmission power control apparatus according to claim 8, **characterized by** having means for receiving, from a receiver, interference power level calculated on a per-subcarrier basis and a propagation-path coefficient $\gamma$ indicating state of a propagation path;

said transmission power controller having:

an average power calculation unit for obtaining, on a per-subcarrier basis, a transmission power value for which a total of transmission power and a value $N/\gamma$ obtained by dividing interference power $N$ by the propagation-path coefficient $\gamma$ will be rendered constant, and calculating an average value of said transmission power value in each subcarrier block; and

a multiplier for multiplying each subcarrier component of the subcarrier block by said average value.

10. A transmission power control apparatus according to claim 8, **characterized by** having means for receiving, from a receiver, receive-signal power level and interference power level calculated on a per-subcarrier basis and a propagation-path coefficient $\gamma$ indicating state of a propagation path;

said transmission power controller having:

an average power calculation unit for obtaining, on a per-subcarrier basis, a transmission power value for which a ratio of receive-signal power to interference power will be rendered constant, and calculating an average value of said transmission power value in each subcarrier block; and

a multiplier for multiplying each subcarrier component of the subcarrier block by said average value.

**11.** A transmission power control apparatus according to claim 8, **characterized by** having:

receiving, from a receiver on a per-subcarrier-block basis, increase/decrease information indicating whether transmission power should be increased or decreased wherein this increase/decrease information is determined by comparing a present transmission power distribution and a transmission power distribution with respect to a subcarrier decided using an interference power level and a propagation-path coefficient $\gamma$ indicating propagation-path state estimated on a per-subcarrier basis; and
unit for increasing or decreasing transmission power by a fixed amount on a per-subcarrier-block basis based upon said increase/decrease information.

**12.** A transmission power control apparatus according to claim 8, **characterized by** having:

unit for receiving, from a receiver, a transmission power value of each subcarrier block calculated using a receive-signal power level, interference power level and a propagation-path coefficient $\gamma$ indicating state of a propagation path estimated on a per-subcarrier basis; and
a multiplier for multiplying each subcarrier component of each subcarrier block by said transmission power value.

FIG. 1

WEIGHTING COEFFICIENT CALCULATION UNIT 52

DEMODULATOR 59

A/D 58

DOWN-CONVERTER 57

$N_{ij}$
$r_{ij}$

SYMBOL OF USER CHANNEL 1
TA1
$50_1$
TC1

SPREADING CODE OF USER CHANNEL 1
TB1
$C_{11}, C_{21}, \cdots C_{N1}$

W10 W11 W12 W1$_{Nc-1}$
$51_1$

S/P CONVERTER 61

$S_0$ $62_0$
$S_1$ $62_1$
$S_2$ $62_2$
$S_{Nc-1}$ $62_{Nc-1}$

62

IFFT 63

TE0
TE1
TE2
TEn

P/S CONVERTER 64

TF1

53
TG1
D/A 54
UP-CONVERTER 55
HYB 56

SYMBOL OF USER CHANNEL 2
TA2
$50_2$
TC2

SPREADING CODE OF USER CHANNEL 2
TB2
$C_{12}, C_{22}, \cdots C_{N2}$

W20 W21 W23 W2$_{Nc-1}$
$51_2$
TF2

SYMBOL OF USER CHANNEL k
TA3
$50_3$
TC3

SPREADING CODE OF USER CHANNEL k
TB3
$C_{13}, C_{23}, \cdots C_{N3}$

W30 W31 W32 W3$_{Nc-1}$
$51_3$
TF3

PILOT-CHANNEL SYMBOL
TAP
$50_P$
TCP

PILOT-CHANNEL SPREADING CODE
TBP
$C_{1P}, C_{2P}, \cdots C_{NP}$

$51_P$
TFP

EP 1 551 115 A1

**FIG. 2**

EP 1 551 115 A1

FIG. 3

## FIG. 4

WEIGHTING COEFFICIENT CALCULATION UNIT — 52

52₁

$\gamma_{10}$ $N_{10}$  $\gamma_{11}$ $N_{11}$  $\gamma_{12}$ $N_{12}$  $\gamma_{13}$ $N_{13}$

52f  52g  52h  52i

$b \times Nij / \gamma ij$

52j  $W_{10}$  $W_{11}$  $W_{12}$  $W_{13}$

AVERAGING UNIT

52j

AVERAGING UNIT

52₈

$\gamma_{1,28}$ $N_{1,28}$  $\gamma_{1,29}$ $N_{1,29}$  $\gamma_{1,30}$ $N_{1,30}$  $\gamma_{1,31}$ $N_{1,31}$

52f  52g  52h  52i

$Wij = b \times Nij / \gamma ij$

52j  $W_{1,28}$  $W_{1,29}$  $W_{1,30}$  $W_{1,31}$

AVERAGING UNIT

$W_1$  $W_2$  $W_8$

$W_{10}$ $W_{11}$ $W_{12}$ $W_{13}$   $W_{14}$ $W_{15}$ $W_{16}$ $W_{17}$   $W_{1,28}$ $W_{1,29}$ $W_{1,30}$ $W_{1,31}$

TC1

POWER CONTROLLER/IFFT UNIT

TF1

51₁

EP 1 551 115 A1

## FIG. 5

EP 1 551 115 A1

## FIG. 6

FIG. 7

EP 1 551 115 A1

| SUBCARRIER SIGNAL | RP1 | → 77c ⊗ | 77d BLOCK AVERAGING UNIT | → CHANNEL ESTIMATION VALUE OUTPUT $\gamma_{ij}$ |

77a
PILOT SYMBOL PATTERN GENERATOR → COMPLEX CONJUGATE UNIT ~ 77b

FIG. 8

WEIGHTING COEFFICIENT DISTRIBUTION UNIT — 91

DEMODULATOR — 59

A/D — 58

DOWN-CONVERTER — 57

$W_1 \sim W_M$

SYMBOL OF USER CHANNEL 1
TA1
SPREADING CODE OF USER CHANNEL 1
TB1
$C_{11}, C_{21}, \cdots C_{N1}$

$50_1$ — TC1

S/P CONVERTER — 61

$S_0$ $S_1$ $S_2$ $\cdots$ $S_{Nc-1}$

W10 W11 W12 $\cdots$ $W_{1Nc-1}$

$62_0$ $62_1$ $62_2$ $\cdots$ $62_{Nc-1}$ — 62

IFFT — 63

TE0 TE1 TE2 $\cdots$ TEn

P/S CONVERTER

$51_1$

TF1

53

D/A — 54

UP-CONVERTER — 55

HYB — 56

TG1

SYMBOL OF USER CHANNEL 2
TA2
SPREADING CODE OF USER CHANNEL 2
TB2
$C_{12}, C_{22}, \cdots C_{N2}$

$50_2$ — TC2

W20 W21 W22 $\cdots$ $W_{2Nc-1}$

$51_2$

TF2

SYMBOL OF USER CHANNEL k
TA3
SPREADING CODE OF USER CHANNEL k
TB3
$C_{13}, C_{23}, \cdots C_{N3}$

$50_3$ — TC3

W30 W31 W32 $\cdots$ $W_{3Nc-1}$

$51_3$

TF3

PILOT-CHANNEL SYMBOL
TAk
PILOT-CHANNEL SPREADING CODE
TBk
$C_{1P}, C_{2P}, \cdots C_{NP}$

$50_P$ — TCk

$51_P$

TFk

EP 1 551 115 A1

# FIG. 9

74 PATH SEARCHER

73 S/P CONVERTER

75 FFT

70 HYB

71 DOWN-CONVERTER

72 A/D

$SP_0$
$SP_1$
$SP_2$
$SP_{Nc-1}$

78 CHANNEL COMPENSATION UNIT

79 P/S CONVERTER

TB1 TBP

80 USER-CHANNEL DESPREADER — USER SYMBOL

81 PILOT-CHANNEL DESPREADER — PILOT SYMBOL

76 LEVEL MEASUREMENT UNIT

77 CHANNEL ESTIMATION UNIT

82 CONTROL INFORMATION GENERATOR FOR POWER CONTROL

92 WEIGHTING COEFFICIENT CALCULATION UNIT

$W_1 \sim W_M$

89 UP-CONVERTER

88

86 FIRST DESPREADER

84 FIRST MODULATOR

83 TIME-DIVISION MULTIPLEXER

PILOT

OTHER CONTROL INFORMATION

87 SECOND DESPREADER

85 SECOND MODULATOR

UPLINK DATA SUCH AS VOICE

EP 1 551 115 A1

**FIG. 10**

# FIG. 11

74 PATH SEARCHER

73 S/P CONVERTER

75 FFT

SP_0
SP_1
SP_2
⋮
SP_{Nc-1}

78 CHANNEL COMPENSATION UNIT

79 P/S CONVERTER

TB1 TBP

80 USER-CHANNEL DESPREADER → USER SYMBOL

81 PILOT-CHANNEL DESPREADER → PILOT SYMBOL

70 HYB

71 DOWN-CONVERTER

72 A/D

76 LEVEL MEASUREMENT UNIT

77 CHANNEL ESTIMATION UNIT

93 WEIGHTING COEFFICIENT STORAGE UNIT

82 CONTROL INFORMATION GENERATOR FOR POWER CONTROL

92 WEIGHTING COEFFICIENT CALCULATION UNIT

94 +  −  ⊕

95 INCREASE/ DECREASE BIT CREATING UNIT

89 UP-CONVERTER

88 ⊕

86 FIRST DESPREADER

84 FIRST MODULATOR

83 TIME-DIVISION MULTIPLEXER

PILOT

OTHER CONTROL INFORMATION

87 SECOND DESPREADER

85 SECOND MODULATOR

UPLINK DATA SUCH AS VOICE

# FIG. 12

COPY

| Ts | Ts | | Ts |
|---|---|---|---|
| TRANSMIT DATA D | TRANSMIT DATA D | $C_1$ ⊗ $1_1$ | $D \cdot C_1$ |

$\triangle f$ ← → f

| | | $C_2$ | Ts |
|---|---|---|---|
| | TRANSMIT DATA D | ⊗ $1_2$ | $D \cdot C_2$ |

$\triangle f$ ← → f

| | | $C_N$ | Ts |
|---|---|---|---|
| | TRANSMIT DATA D | ⊗ $1_N$ | $D \cdot C_N$ |

$\triangle f$ ← → f

# FIG. 13

(a)

$f_1$ $f_2$ $f_3$ $f_4$ $f_5$ ... $f_N$

$2/T_s$

(b)

$1/T_s$

# FIG. 14

FIG. 15

EP 1 551 115 A1

## FIG. 16

TRANSMIT SYMBOL (TA) +1 −1 +1 +1

CODE PATTERN (TB)

TC (TA × TB)

SYMBOL TIMING

## FIG. 17

8 SYMBOLS

8 × 4 (CHIPS)

TAi

⊗

TBi
(4 CHIPS)

TCi

TD ------------ $TD_0$

## FIG. 18

OFDM SYMBOL

| | | | | | | | | |
|---|---|---|---|---|---|---|---|---|
| $f_0$ | chip0 | chipNc | | | | | | |
| $f_1$ | chip1 | chipNc+1 | | | | | | |
| $f_2$ | chip2 | chipNc+2 | | | | | | |
| $f_{Nc-2}$ | chipNc−2 | | | | | | | |
| $f_{Nc-1}$ | chipNc−1 | | | | | | | |

**FIG. 19**

EP 1 551 115 A1

# FIG. 20

# FIG. 21

(a) WITHOUT POWER CONTROL

code A

ORTHOGONAL

code B

(b) CONVENTIONAL POWER CONTROL

NOT ORTHOGONAL

| | **INTERNATIONAL SEARCH REPORT** | International application No. |
|---|---|---|
| | | PCT/JP02/10397 |

**A. CLASSIFICATION OF SUBJECT MATTER**
   Int.Cl$^7$  H04B7/26, H04B1/707, H04J11/00

According to International Patent Classification (IPC) or to both national classification and IPC

**B. FIELDS SEARCHED**

Minimum documentation searched (classification system followed by classification symbols)
   Int.Cl$^7$  H04B7/26, H04B1/707, H04J11/00

Documentation searched other than minimum documentation to the extent that such documents are included in the fields searched
   Jitsuyo Shinan Koho          1922–1996   Toroku Jitsuyo Shinan Koho   1994–2002
   Kokai Jitsuyo Shinan Koho    1971–2002   Jitsuyo Shinan Toroku Koho   1996–2002

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2002-237795 A (Matsushita Electric Industrial Co., Ltd.), 23 August, 2002 (23.08.02), Claims; Par. Nos. [0013] to [0016] (Family: none) | 1–12 |
| A | JP 2002-246958 A (Mitsubishi Electric Corp.), 30 August, 2002 (30.08.02), Claims & WO 02/67478 A1 | 1–12 |
| A | JP 2001-285089 A (Matsushita Electric Industrial Co., Ltd.), 12 October, 2001 (12.10.01), Claims & WO 01/76104 A1          & EP 1180858 A1 & CN 1365550 A           & US 2002/016801 A1 & AU 200142781 A         & KR 2002026280 A | 1–12 |

☐ Further documents are listed in the continuation of Box C.          ☐ See patent family annex.

\* Special categories of cited documents:
"A"  document defining the general state of the art which is not considered to be of particular relevance
"E"  earlier document but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search   07 January, 2003 (07.01.03) | Date of mailing of the international search report   21 January, 2003 (21.01.03) |
|---|---|
| Name and mailing address of the ISA/   Japanese Patent Office | Authorized officer |
| Facsimile No. | Telephone No. |

Form PCT/ISA/210 (second sheet) (July 1998)